Europäisches Patentamt

European Patent Office

Office européen des brevets

(11) Publication number: **0 271 347**
**A2**

(12) **EUROPEAN PATENT APPLICATION**

(21) Application number: **87310892.2**

(22) Date of filing: **10.12.87**

(51) Int. Cl.⁴: **H 04 B 1/04**

(30) Priority: **10.12.86 GB 8629529**

(43) Date of publication of application:
**15.06.88 Bulletin 88/24**

(84) Designated Contracting States:
**AT BE CH DE ES FR GR IT LI LU NL SE**

(71) Applicant: **The General Electric Company, p.l.c.**
**1 Stanhope Gate**
**London W1A 1EH (GB)**

(72) Inventor: **Chamberlain, Jack Keeble**
**6 Queensbury Road**
**Colindale NW9 8LT (GB)**

(74) Representative: **Hoste, Colin Francis**
**The General Electric Company p.l.c. Central Patent**
**Department (Wembley Office) Hirst Research Centre**
**East Lane**
**Wembley Middlesex, HA9 7PP (GB)**

(54) Radio transmitter arrangements.

㉗ In a cordless telephone arrangement in which a plurality of radio transmitters are required to transmit modulated radio-frequency signals by way of a common antenna, each transmitter has its output connected to a common path to the antenna by way of a respective directional coupler.

Fig.3

EP 0 271 347 A2

Bundesdruckerei Berlin

## Description

### Radio Transmitter Arrangements

The present invention relates to radio transmitter arrangements.

It is often necessary to multiplex together the outputs of several radio transmitters so that they can be radiated from a common antenna. If the transmitters share a common frequency band within which the arrangement of carrier frequencies changes dynamically with time, it is not generally possible to effect the multiplexing and ensure transmitter-to-transmitter isolation by means of frequency selective networks, and it is common to employ hybrids for the purpose.

Any coupling of the power from one transmitter into the output amplifier of another may cause intermodulation products to be generated that may cause interference to other channels within the system as to other services or systems outside it.

According to one aspect of the present invention in a radio transmitter arrangement in which a plurality of radio transmitters are arranged to transmit signals by way of a common path, for example to a common antenna, each of said radio transmitters is arranged to have its output connected to said common path by way of a respective attenuating coupler arrangement, such as a directional coupler.

According to another aspect of the present invention in a cordless telephone arrangement in which a plurality of radio transmitters are arranged to transmit modulated radio-frequency signals by way of a common antenna, each of said radio transmitters is arranged to have its output connected to a common path to said antenna by way of a respective directional coupler.

Preferably each radio transmitter is arranged to provide substantially more power than is to be radiated by said antenna, and said directional coupler is arranged to have a correspondingly high coupling loss in order to achieve a high level of isolation between transmitters.

A radio transmitter arrangement in accordance with the present invention will now be described with reference to the accompanying drawing, of which:-

Figure 1 shows the transmitter arrangement schematically;

Figure 2 shows part of a known transmitter arrangement, and

Figure 3 shows part of the present transmitter arrangement.

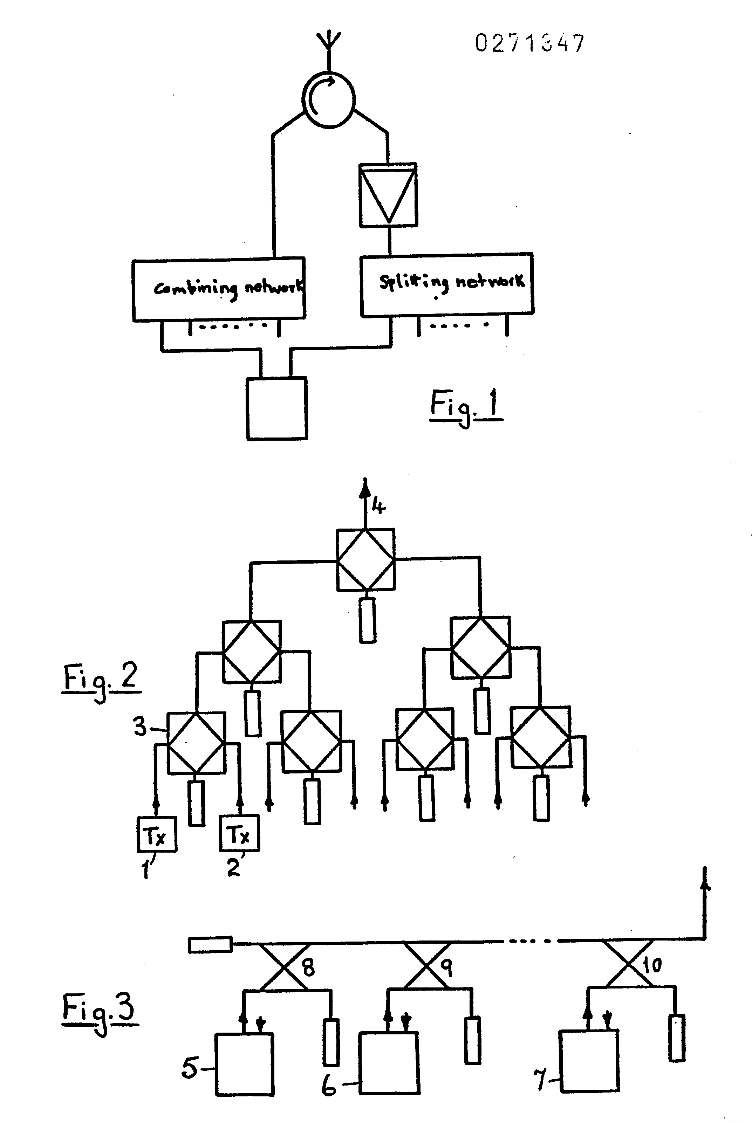

Referring first to Figures 1 and 2, the required isolation between transmitters 1 and 2, say, is provided by a hydrid 3, the level of isolation being high but finite, 30dB being considered good isolation in many applications. Finite return losses of subsequent components of the multiplexing chain effectively degrade this isolation, so that an effective isolation of about 25dB is probably as much as could normally be counted on without special (narrow band) tuning.

The intermodulation performance of an output amplifier is often expressed in terms of its conversion loss from extraneous input (at its output terminals) to intermodulation product output. Conversion losses of about 15dB are typical in the type of situation of interest, for third-order products (usually dominant).

With the arrangement shown in Figure 2 carrier-to-intermodulation ratios of about 40dB are to be expected, whereas specifications often demand ratios of 60dB or more. Additional means of isolation then have to be introduced. Passive non-reciprocal devices are an obvious choice, but are expensive.

In the arrangement shown in Figure 2 the power required from the transmitters 1 and 2 exceeds that required at the common output point 4 only by a factor corresponding to the maximum loss in the coupling network, which would be about 9dB for the case of three tiers of hydrids illustrated. However, within certain limits it is often possible to generate, inexpensively, substantially more power than this requirement implies. For instance, if 10mW per carrier is required at the point, 80-100mW must be available from the transmitters 1 and 2. However, at frequencies below 1GHz, say it is easy and cheap to generate about 1W. This fact is used to advantage in the present arrangement.

Figure 3 shows an arrangement of directional couplers designed to multiplexing say, eight transmitters 5, 6, 7 under requirements similar to those referred to above. With the dispensation that the output powers of these transmitters 5, 6, 7 may be larger than the minimum required for non-frequency selective multiplexing by way of hybrids, the coupling losses of directional couplers 8, 9, 10 may be made appropriate for the ratios of wanted power at a common point 11 to available transmitter power.

The advantage of the arrangement relative to the conventional multiplexing scheme is best illustrated by means of some representative values, which will be given for the eight-transmitter case with 1W available from each transmitter and 10mW required at point 11. Consider coupling from transmitter 6 to transmitter 5, for example:-

Loss from coupler 9 to point 11 through six succeeding couplers:     say 4dB

With coupling loss, 6 through coupler 9:     16dB

Directivity of coupler 9, allowing for subsequent return losses:     >20dB

Coupling loss through coupler 8:     16dB

Conversion loss, third-order intermodulation products (as earlier)     15dB

Hence carrier-to-intermodulation ratio     67dB

Thus by using relatively high power transmitters 5, 6, 7 and high-loss directional couplers 8, 9, 10 having reasonably high directivity, the required level of isolation may be achieved directly without the use of special frequency-selective networks.

## Claims

1. A radio transmitter arrangement in which a plurality of radio transmitters are arranged to transmit signals by way of a common path, wherein each of said radio transmitters is arranged to have its output connected to said common path by way of a respective attenuating coupler arrangement.

2. A radio transmitter arrangement in accordance with Claim 1 wherein each said attenuating coupler arrangement is a directional coupler.

3. A radio transmitter arrangement in accordance with Claim 1 or Claim 2 wherein said common path is connected to a common antenna.

4. A cordless telephone arrangement in which a plurality of radio transmitters are arranged to transmit modulated radio-frequency signals by way of a common antenna, each of said radio transmitters is arranged to have its output connected to a common path to said antenna by way of a respective directional coupler.

5. A cordless telephone arrangement in accordance with Claim 4 wherein each radio transmitter is arranged to provide substantially more power than is to be radiated by said antenna, and each said directional coupler is arranged to have a correspondingly high coupling loss in order to achieve a high level of isolation between transmitters.

0271347

Fig. 1

Fig. 2

Fig. 3